# EUROPEAN PATENT SPECIFICATION

(11) **EP 3 011 077 B1**
(45) Date of publication and mention of the grant of the patent: **06.06.2018**
(21) Application number: 14735864.2
(22) Date of filing: 10.06.2014
(51) Int. Cl.: C25B 15/00, C25B 15/08, C25B 1/04, C25B 9/06, C25B 9/18, H01R 13/447, H01R 13/52

(54) **A HYDROGEN GAS GENERATION SYSTEM, AND PROCESS FOR THE ELECTROCATALYTIC PRODUCTION OF HYDROGEN GAS.**
SYSTEM ZUR ERZEUGUNG VON WASSERSTOFFGAS UND VERFAHREN ZUR ELEKTROKATALYTISCHEN ERZEUGUNG VON WASSERSTOFFGAS
SYSTÈME DE GÉNÉRATION DE GAZ D'HYDROGÈNE, ET PROCÉDÉ DE PRODUCTION ÉLECTROCATALYTIQUE DE GAZ D'HYDROGÈNE

(30) Priority: 18.06.2013 GB 201310794
(43) Date of publication of application: 27.04.2016
(73) Proprietor: Clean Power Hydrogen Limited, Mullingar Co. Westmeath (IE)
(72) Inventor: WILLIAMSON, Nigel, Dronfield Derbyshire S182EX (GB)
(74) Representative: Purdy, Hugh Barry
(86) International application number: PCT/EP2014/062003
(87) International publication number: WO 2014/202429

(56) References cited:
- US-A- 4 476 105
- US-A- 6 096 178
- US-A1- 2011 006 544
- US-A1- 2012 085 659

## Description

### Technical Field

The invention relates to a hydrogen gas generation system. In particular, the invention relates to a hydrogen gas generation system suitable for large-scale generation of hydrogen gas.

### Background to the Invention

There have historically existed numerous projects for the development of a technology to translate electrical energy into another form of energy for storage, where excess capacity exists from time-to-time throughout the day. This excess capacity exists due to the fluctuations in demand, and cause considerable difficulty for the power generation system, with associated waste and cost. Battery storage of electricity has been used on small-scale projects, but is fraught with difficulties. These include poor retention of electrical energy as depletion progresses, limited, highly toxic and polluting resources for their construction, and limited durability over extended periods of time.

Electrolytic hydrogen, on the other hand, has long been considered a superior storage medium, but has suffered from its own difficulties, which include high capital cost of generation, low conversion efficiency, high maintenance costs and short duration life expectancy for the heart of the system, a PEM (Proton Exchange Membrane)-based stack. There are numerous government funded projects World-wide to develop ever larger PEM-based systems for infrastructure development along numerous so-called Hydrogen Highways. Typical integrated systems for such projects incorporate PEM-based electrolysers, purification technologies (typically Palladium filters), compressors and storage cylinders to store purified hydrogen at pressures of up to 700bar (10,150psi, 70MPa). Such systems are prohibitively expensive and wasteful of product gas (up to 12% may be lost during the regular, required purge of the palladium filter, and a similar loss may occur past the seals of the compressor), apart from having reliability issues which render them expensive to maintain. US 2011/006544 A1 describes a hydrogen gas generator system comprising a water electrolyser, a gas-liquid separator, and a cryogenic gas separation system. The typical approach to PEM-based infrastructure projects is to design ever larger stacks which are very heavy, difficult to maintain, and more prone to leakage and membrane failure than smaller units. It is an object of the invention to overcome at least one of the above-referenced problems.

### Statements of Invention

The system of this invention makes use of a different approach, in which the gas is generated in numerous small alkaline electrolysis (AE) stacks, which may be mass produced by moulding. These may be grouped together in modules of various sizes to meet the desired gas output or available electrical input. The gas so generated is a stoichiometric mixture of hydrogen and oxygen, on which is borne some moisture. From the electrolysers, the gas enters a cryogenic system wherein it is primarily dried by distillation of the molecular water, which contains most of the contaminants which may be present in the system. Subsequently, the oxygen is distilled out for storage and optionally for commercial sale, leaving the gaseous, purified hydrogen which can be subsequently stored either as a gas or taken down to liquefaction temperatures for storage as a cryogenic liquid.

Other method of drying the mixed hydrogen and oxygen gases may be used in preference to cryogenic drying, e.g. pressure swing adsorption, desiccation and molecular sieves, following which the gases would be cryogenically separated.

Capital costs for such a system are considerably lower than those for a PEM-based system, as are energy and maintenance costs, bringing the cost of electrolytic hydrogen down to well below the equivalent energy cost of hydrocarbon fuel for use in road vehicles and industrial processes. Beyond this, due to its modularity, the system is infinitely scalable.

Thus, in a first aspect, the invention provides a hydrogen gas generator system comprising:
- an electrolysis reactor stack adapted to perform electrolysis on an electrolyte solution and generate a mixture of electrolyte solution and oxygen and hydrogen gas;
- a separator configured to receive from the reactor stack the mixture of electrolyte solution and oxygen and hydrogen gas, and separate the oxygen and hydrogen gas mixture from the electrolyte solution;
- a drying system configured to receive the mixture of oxygen and hydrogen gas and remove water from the gaseous mixture;
- a gas separation system configured to expose the dried gas mixture to cryogenic temperatures to distil the oxygen out of the mixture as non-gaseous oxygen to leave purified hydrogen gas; and
- a storage system for storing the purified hydrogen as a gas or a liquid.

In one embodiment, the drying system is configured to expose the gas mixture to cryogenic temperatures suitable for drying the gas mixture. Typically, the cryogenic temperature suitable for drying the mixture of gasses is less than -20°C, ideally less than -30°C. At this temperature, the moisture solidifies to ice crystals which are easily separated from the gaseous mixture. A specific apparatus for drying the gaseous mixture comprises multiple chambers in which the water vapour is attracted out of the mixed gases progressively, chamber-to-chamber, and in which the temperature of each chamber can be controlled to alternatively freeze and, subsequent to isolation from the gasflow, liquefy the water for draining away or restoring to the separation vessel. Preferably, the drying system reduces the water content of the mixture of gasses to a dew-point of at least -60°C.

The gas separation system is preferably configured to reduce the temperature of the gaseous mixture using a cryogenic coolant to a point where the oxygen gas liquefies or solidifies, in which the form the liquid or solid oxygen may be easily separated from the hydrogen gas. The system may also be configured to reduce the pressure of the gasses, thereby raising the oxygen boiling point. A specific apparatus for separating oxygen from the gaseous mixture comprises cryogenically cooled vessels through which the gas passes, wherein the oxygen temperature is reduced to below its liquid temperature, causing it to condense out of the gas, thereby leaving only the hydrogen in gaseous form. Alternatively, the oxygen may be removed from the gas by use of an acoustic Sterling (pulse tube) cryogenic technology. In one embodiment, the gas separation system is configured to bring the temperature of the mixture of gasses to less than - 182.95°C, 90.19K, typically at 101.325kPa, at which point the oxygen liquefies and can be easily separated from the gas phase by gravity.

In this specification, the term "purified hydrogen gas" should be understood to mean hydrogen gas having at least 90% hydrogen and ideally less than 1% water. Preferably, the hydrogen gas comprises at least 91%, 92%, 93%, 94%, 95%, 96%, 97%, 98% or 99% hydrogen. The method of determining hydrogen gas purity employs a hydrogen gas purity monitor AK100 sold by ABB. The humidity of the gas would be determined by use of a humidity meter, for example humidity meter OM-DVTH sold by Omega Engineering Limited.

In a preferred embodiment of the invention, the system comprises a plurality of electrolysis reactor stacks, suitably substantially identical reactor stacks arranged in a modular structure. In one embodiment, the separator is configured to receive from the plurality of reactor stacks the mixture of electrolyte solution and oxygen and hydrogen gas. In another embodiment, a plurality of separators are provided to receive the mixture of electrolyte solution and oxygen and hydrogen gas from the reactor stacks. In one embodiment, each reactor stack has an associated separator.

Typically, the system comprises a plurality of reactor stacks arranged in a modular structure, for example at least 5, 10, 15, 20, 30, 40, 50, 60, 70, 80, 90 or 100 hundred reactor stacks. Numerous such modular structures may be combined for larger infrastructure projects. Thus, the reactor stacks may have a modular structure, allowing the flexibility to have reactor stacks added to the system or removed from the system, with ease. Typically, the reactor stacks are moulded.

Typically, the reactor stack is one which produces a stoichiometric mixture of oxygen and hydrogen. Examples of suitable reactor stacks include alkaline electrolysis stacks, such as are used in the mixed gas generation technology typically referred to as HHO, Brown's gas or oxy-hydro gas, where the product gas is fed into the inlet of a vehicle to enhance combustion. In a preferred embodiment, the reactor stack comprises a plurality of spaced apart electrode plates, in which each plate has an upper aperture and a lower aperture to allow pumped movement of electrolyte solution across the plates, wherein the upper aperture is larger than the lower aperture. The upper aperture is larger as the electrolyte solution at the top of the stack has a greater volume due to the presence of gaseous oxygen and hydrogen. This allows for the volume increase due to electrolyte solution at the top of the plates carrying generated gasses (generally oxygen and hydrogen). Typical stacks world-wide have plates with small communication holes drilled through top and bottom which are of substantially similar size, and too small to allow pumped flow through the stack. Suitably, the upper aperture has an area at least 20%, 30%, 40%, 50%, 60%, 70%, 80%, 90%, or 100% greater than the area of the lower aperture. Suitably, the apertures are circular, for ease of manufacture, though other shapes may also be considered.

Preferably, the reactor stack comprises a plurality of electrode plates separated by sealing spacers which define the distance between the plates and a path for movement of electrolyte solution between adjacent plates from the lower aperture to the upper aperture. Suitably, the spacer is configured to provide a plate separation of 0.2-2mm, preferably 0.25 to 1.25mm, and ideally about 0.5mm. In one embodiment, the spacing between the plates is 0.5-1.5mm, preferably about 0.5mm, and the electrolyte solution preferably has a concentration of 3-7g/L, 4-6g/L, and ideally about 5g/L. Preferably, the spacer is formed of a resiliently deformable material, for example rubber, EPDM or combination elastomer/polymer material of approximate hardness on the Shore-A scale of between 60 and 80.

It was found that shaping the sealing spacers and providing flow-holes of sufficient size in order to allow for a pumped flow through the stack, offered the opportunity to pump the flow and thereby attain the benefits briefly described above.

In one embodiment, the electrode plates are contact electrode plates. Contact electrode plates are mono-polar plates, in between which are bi-polar plates, in multiples appropriate to the requisite Voltage for cell reaction activity, each space being a sub-division of the supply Voltage in a serial stack. (e.g., in a 12Volt system, between each contact electrode plate, there might be 6 spacers defining 6 cells, each of 2V.)

In another embodiment, the electrode plates comprise an electrically parallel reactor stack. In such reactors, the plates are typically fed with an appropriately low Voltage, with each plate generally of alternate polarity.

The plates may be Nickel plated or uncoated stainless steel cell plates.

Preferably, the separator is a gravity separator tank that allows the gas and electrolyte solution to separate under the force of gravity. Suitably, the separator comprises an electrolyte solution return line for returning electrolyte solution from the separator to the reactor stack. Ideally, the system comprises a pump for pumping electrolyte solution in a circuit between the reactor stack(s) and the separator. The electrolyte solution may be pumped around the circuit either at ambient, or close to ambient, pressure, or at elevated pressure, dependent upon down-stream system demands. Ideally, the flow rate of the electrolyte solution in the circuit is at least 10L/minute per individual stack, or approximately 200ml/minute per cell.

Suitably, the system comprises a reservoir of liquid and means for passing the gas removed from the separator through the reservoir of liquid, preferably by bubbling the gas through the liquid. Typically, an outlet of the gas inlet is submerged within the reservoir of liquid. Suitably, the liquid is water. Thus, the mixed gases flow from the top of the reservoir, in which they have been separated from the electrolyte solution, through tubes to a 'bubbler' or series of bubblers which remove from the gas stream any carried over electrolyte solution which may be borne on the flow. From the last of the bubblers in the flow-path, the gas flows to its point of use, which, in this case, is the drying and cryogenic separation system.

The term "electrolyte solution" as used herein should be understood to mean an aqueous solution of one or more electrolytes, for example an aqueous solution of potassium hydroxide. The electrolyte solution may be acidic or alkaline in character. Other suitable electrolytes include baking soda, potassium hydroxide, sodium hydroxide, citric acid, vinegar, sulphonic acid, etc. Typically, the electrolyte solution has a concentration of 0.05 to 10% (w/v), preferably 0.05 to 5.0% (w/v). When the spacing between the plates is 0.25-1.25mm, suitably 0.3 to 0.75mm, the electrolyte solution typically has a concentration of 0.03 to 0.08%, preferably 0.05 to 0.07% (w/v). Suitably, the spacing between the plates is 0.25-1.5mm, preferably about 0.5mm. Ideally, the electrolyte solution has a concentration of 3-7g/L, 4-6g/L, and ideally about 5g/L.

In one embodiment, the system further includes an electrolyte solution reservoir adapted to supply the or each electrolysis reactor stack with electrolyte solution.

In one embodiment, the system further includes an oxygen storage system for storing the separated oxygen as a liquid or a gas.

In a preferred embodiment, the hydrogen gas generator system of the invention comprises:
- a plurality of modular electrolysis reactor stacks (typically arranged as a modular structure), each reactor stack adapted to perform electrolysis on an electrolyte solution and generate a mixture of electrolyte solution and oxygen and hydrogen gas;
- one or more separators configured to receive from the reactor stacks the mixture of electrolyte solution and oxygen and hydrogen gas, and separate the oxygen and hydrogen gas mixture from the electrolyte solution;
- one or more drying systems configured to receive the mixture of oxygen and hydrogen gas and at least partially dry the mixture of gasses, preferably by exposing the gas mixture to cryogenic temperatures to dry and purify the gas mixture;
- a gas separation system configured to expose the at least partially dried gas mixture to cryogenic temperatures to distil the oxygen out of the mixture as non-gaseous oxygen to leave purified hydrogen gas; and
- a storage system for storing the purified hydrogen as a gas or a liquid.

The invention also provides a process for generating electrolytic hydrogen comprising the steps of:
- performing electrolysis on an electrolyte solution in an electrolysis reactor stack to generate a mixture of electrolyte solution, gaseous oxygen and gaseous hydrogen;
- separating the gaseous mixture of oxygen and hydrogen from the electrolyte solution;
- drying the gaseous mixture of oxygen and hydrogen to remove water and impurities in the water,
- exposing the gaseous mixture of oxygen and hydrogen to cryogenic temperatures to distil the oxygen out of the mixture as non-gaseous oxygen to leave purified hydrogen gas; and storing the purified hydrogen as a gas or a liquid.

The invention also provides a process for generating electrolytic hydrogen, which method employs a hydrogen gas generator system of the invention and comprises the steps of:
- performing electrolysis on an electrolyte solution in the at least one electrolysis reactor stack to generate a mixture of electrolyte solution, gaseous oxygen and gaseous hydrogen;
- separating the gaseous mixture of oxygen and hydrogen from the electrolyte solution in the at least one separator;
- drying the gaseous mixture of oxygen and hydrogen in the at least one drying system to remove water and impurities in the water,
- exposing the gaseous mixture of oxygen and hydrogen to cryogenic temperatures in the gas separation system to distil the oxygen out of the mixture as non-gaseous oxygen to leave purified hydrogen gas; and
- storing the purified hydrogen as a gas or a liquid in the storage system.

Preferably, the mixture of gasses is dried by exposing the gaseous mixture to cryogenic temperatures to distil out non-gaseous water and impurities in the water;
Typically, the step of distilling oxygen out of the gaseous mixture is carried out at reduced pressure relative to the rest of the system.

Suitably, the oxygen that is distilled out of the gaseous mixture is stored as gaseous or liquid oxygen.

Ideally, the electrolysis step is carried out using a plurality of modular electrolysis reactor stacks.

Preferably, the step of separating electrolyte solution from the mixture of gasses is carried out using a plurality of gravity separators.

Typically, the electrolysis is alkaline electrolysis.

Preferably, during the electrolysis step the electrolyte solution is pumped across the reactor stack.

Typically, the purified hydrogen gas a purity of at least 95%, 96%, 97%, 98%, 99%, 99.2%, 99.4%, 99.6%, 99.7%, 99.8%, 99.9% or 99.999%, as determined using a NOVA 436 gas analyser sold by Nova Analytical Systems of Ontario Canada.

The invention also provides a method for converting excess electrical energy into hydrogen for storage, which method employs a method of generating electrolytic hydrogen according to the invention, wherein the excess electrical energy is employed to power the electrolytic conversion of the electrolyte solution into the gaseous mixture of oxygen and hydrogen.

Typically, the excess energy is supplied by a wind, solar, wave or tidal electricity generating system.

Suitably, the excess electrical energy is employed to power all or substantially all of the steps of the method for converting excess electrical energy into hydrogen for storage.

### Brief Description of the Figures

**Fig. 1** is an illustration of hydrogen gas generator system according to one embodiment of the invention;
**Fig. 2** is an illustration of hydrogen gas generator system according to one embodiment of the invention having four modular banks of reactor stacks, each bank comprising 100 reactor stacks;
**Fig. 3** is an end view of a bank of 100 reactor stacks arranged in 10x10 array;
**Fig. 4** is a perspective view of one of the reactor stacks of the bank shown in Fig. 3;
**Fig. 5** is a view of an external face of an end plate of the reactor stack forming part of the system of the invention;
**Fig. 6** is a view of an internal face of the end plate of Fig. 5;
**Fig. 7** is a view of a spacer forming part of a reactor stack of Fig. 5;
**Fig. 8** is a drawing of the metal bi-polar cell plate 38 forming part of a reactor stack of Fig. 5;
**Fig. 9** shows a terminal plate, with its contact tab, forming part of a reactor stack of Fig. 5;
**Fig. 10** is an exploded view of a portion of a reactor stack of Fig. 5 showing how an end plate, metal bi-polar plate, and spacer cooperate when built into a stack;

### Detailed Description of the Invention

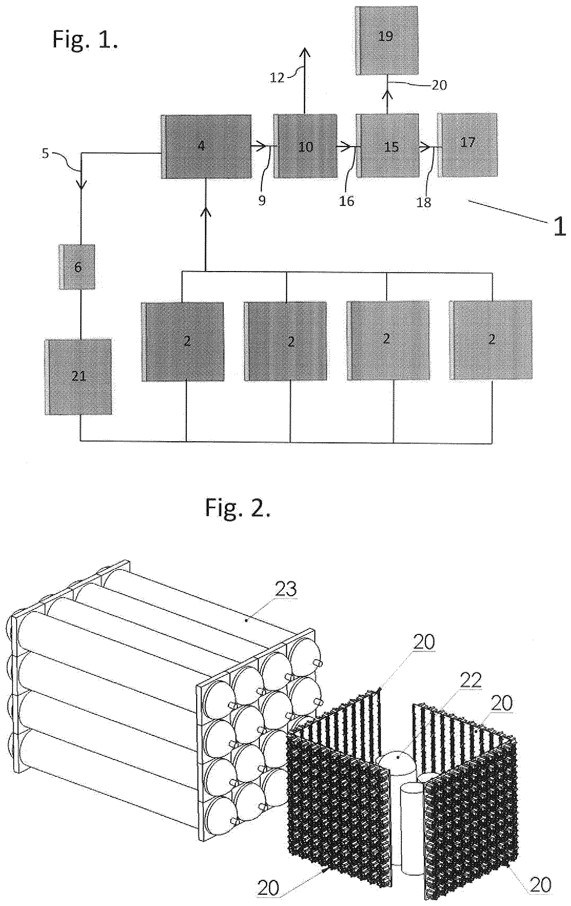

Referring to the drawings, and initially to Fig. 1, there is illustrated one embodiment of a hydrogen gas generator system according to the invention and indicated generally by the reference numeral 1. The system comprises a bank of four electrolysis reactor stacks 2, in this case alkaline electrolysis reactor stacks (described in more detail below). Piping 3 carries a mixture of electrolyte solution and gaseous oxygen and hydrogen generated in the stacks 2 to a separator 4. In the separator 4, the electrolyte solution and gasses separate under the force of gravity. An electrolyte solution return line 5 carries electrolyte solution from the bottom of the separator 4 back to a bottom of each of the reactor stacks 2. A pump 6 is provided in this circuit, and is actuated to pump electrolyte solution around the circuit and across the reactor stacks.

A gas output line 9 is provided to carry the humid mixture of oxygen and hydrogen from the separator 4 to a cryogenic drying unit 10. In this unit, the moist gas mixture is exposed to cryogenic temperatures resulting in the moisture in the gas mixture condensing and separating from the gas mixture. The water condensate is removed from the unit via the output line 12. Alternatively, said drying unit could comprise an alternative drying technology, either separately or in combination with the foregoing. Such may include pressure-swing adsorption, desiccation and the use of molecular sieves.

The thus dried mixture of oxygen and hydrogen gasses are then supplied to a gas separation unit 15 via a dried gas output line 16. The gas separation unit 15 comprises a cryogenic distillation apparatus (not shown) configured to expose the mixture of gasses to cryogenic temperatures suitable for liquefying the oxygen gas, and means for separating the oxygen liquid from the gas to leave purified hydrogen which passes to a hydrogen gas storage unit 17 via a hydrogen line 18. The liquefied oxygen is transported to an oxygen storage tank 19 via a cooled supply line 20.

As already described above, the generator is comprised of a number of modules, each of which employs a number of (in the above example, four) small, mass-produced AE stacks. Each module has a header tank which can be shared with other modules, or dedicated to a module, and a pump which circulates electrolyte through the stacks at a velocity sufficient to facilitate gas-bubble release from each cell as it is generated.

A cooling system 21 is placed within the circulation system to maintain operating temperatures at optimum values. Excess heat energy can be used on larger-scale projects for hot water and home heating by cooperation with heat pumps and capture technologies, for use in neighbouring communities.

As described above, the gas, as generated, is a mixture of hydrogen and oxygen at a ratio of 2/3 to 1/3 respectively. Mixed gas from the electrolyser modules is separated from the water by gravity in the header tank(s) and combined in a manifold. This then feeds a cryogenic separation system in which the drying and the oxygen distillation occurs. The oxygen is of a sufficient purity for commercial sale, and may be stored in cylinders for subsequent sale, or vented to the atmosphere, if required.
The hydrogen gas which remains is then stored for later use as a motive fuel, or for use in industrial processes, which currently, typically make use of hydrogen produced from methane by the steam reformation process.

Fig. 2 shows one possible configuration of a 100-stack wall, which is shown as a part of the multiple-stack generator above, constructed of 10 x 10-stack modules 20. Any number of stacks could be used to make up a module. Similarly, any number of modules could be used in cooperation with each other, in a preferred arrangement, to suit a given application. The configuration includes a cryogenic gas separation system 22, shown for the sake of simplicity as a number of cylinders, and a gas store 23 which may be used as an alternative to cryogenic storage of the hydrogen. Any stored oxygen would be stored separately for safety.

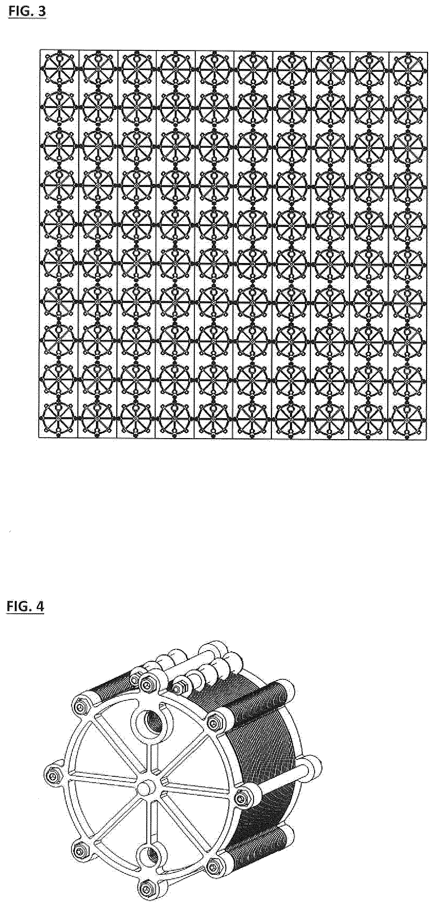

Fig. 3 is a simplified view of one possible arrangement of multiple stacks in a wall or panel of a gas generator. In addition to the stacks in each module, there would be a reservoir of electrolyte and a circulation pump, as well as numerous conduits for conducting the electrolyte to the stacks, and a mixture of electrolyte and gases from them, back to the reservoir (separation vessel) during a gas generation cycle.

Fig. 4 is a view of a single stack of the type shown in multiples in the above graphic. Stacks of this design are comprised of moulded flow-field gaskets (cell separators) and moulded end-plates. This design ensures ease of high-volume manufacture with an exceptionally high degree of repeatability while also ensuring exceptionally low cost. Furthermore, stacks can easily be assembled by robots, thereby further ensuring accuracy, consistency and low manufactured unit cost.

Each stack of the size shown is capable of generating mixed gas (hydrogen and oxygen in a stoichiometric mix) at a rate of approximately 3.5litres/minute. This represents a production of hydrogen gas of 2.33litres/min. A panel of 100 stacks, therefore, would produce approximately 233litres of hydrogen per minute, or 30kg per day.

By comparison with other technologies, this is an exceptionally compact, cost effective and economical electrolytic hydrogen generation system, which is infinitely scalable and easy to maintain.

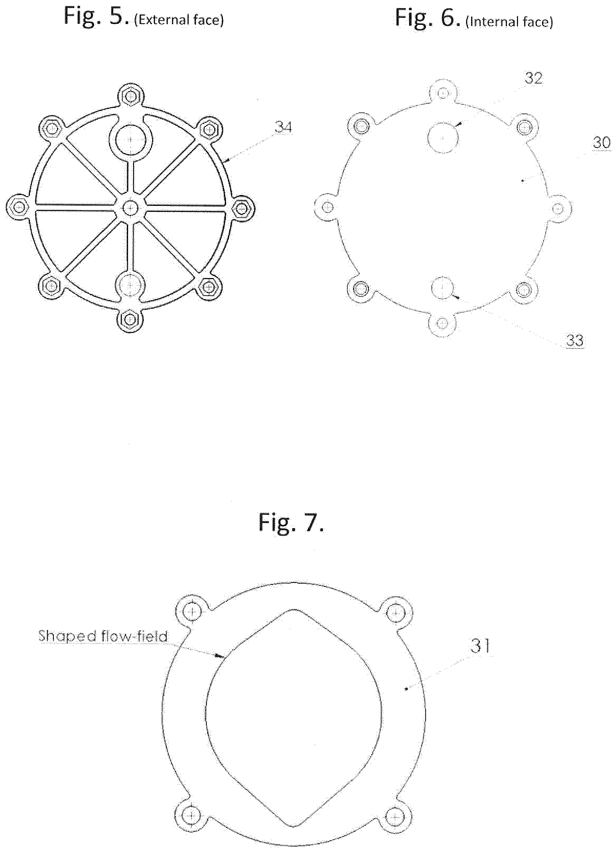

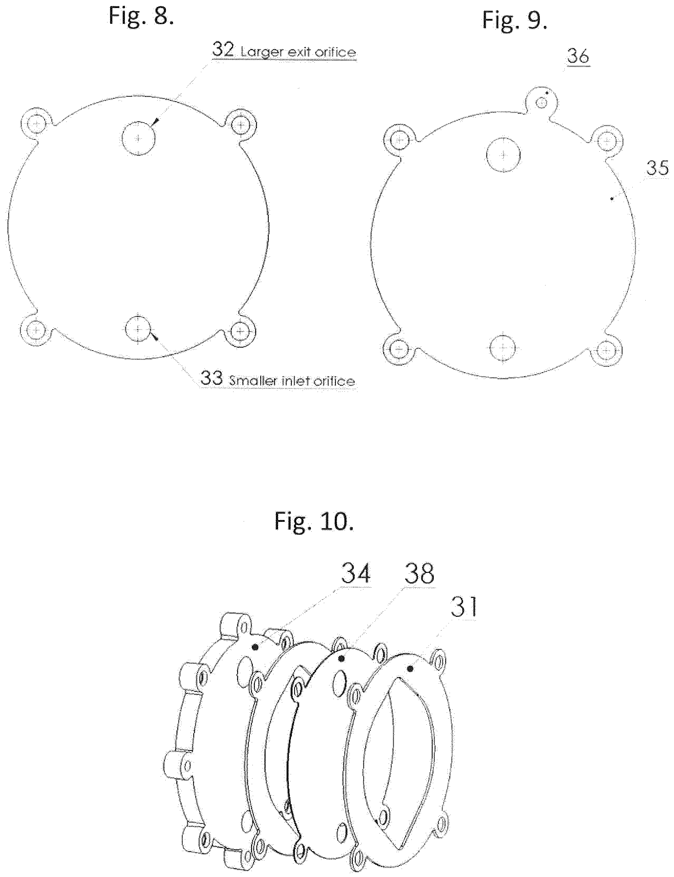

In more detail, and referring to Figs 5 to 10, the reactor stack 2 comprises a plurality of nickel coated or uncoated stainless steel bi-polar electrode plates 30 separated by spacer plates 31 that define a distance of about 1mm between the plates and define together with adjacent plates 30 the envelope in which electrolyte solution (not shown) is contained. Each plate 30 comprises an upper outlet aperture 32 and a lower inlet aperture 33, the outlet aperture being larger than the inlet aperture to facilitate greater volume due to the electrolyte solution at the top of the plates carrying more gas. A terminal electrode plate 35 having a contact tab 36 is provided within the stack for connection to the electrical supply, and two end plates 34 are provided. The inlet apertures 33 are aligned to provide an inlet manifold for electrolyte solution that extends across the base of the plates, and is in fluid communication with the electrolyte solution return line 5. Likewise, the outlet apertures 32 are aligned to provide an outlet manifold for electrolyte solution (which carries the generated mixed gases) that extends across the top of the plates, and is in fluid communication with the electrolyte/gas piping 3. A pump 6 is provided in the electrolyte solution inlet 5 and adapted to pump electrolyte solution in a circuit through the reactor stack, to the separator tank, and back to the reactor stack, by way of a thermal control system 21 (heat exchanger or radiator, etc.).

The electrolyte solution for a serial stack is a lower than 1% solution of potassium hydroxide (w/w) in water. The separator tank 3 also acts as a header tank for electrolyte solution, and may be topped up with further water when the water in the electrolyte solution in the system is depleted. The electrical connections to the stack may be provided by a battery, as with vehicular systems, or by use of a Power Supply Unit (PSU) which takes mains AC Voltage and converts it into high current, low Voltage DC. In the case of a vehicle-mounted system, in which the stack is designed for low Voltage with alternating polarity from plate-to-plate, a DC/DC convertor is required to take the 12 or 24VDC input and convert it to a sub-3VDC output at high current. In such systems, the electrolyte concentration would be considerably higher, at around 10-25% w/w.

In use, the system is charged with electrolyte solution, and the pump is actuated which draws the electrolyte solution out of the reservoir, pushing it through the stack (previously described), in which the gas is generated, and back to the separator/reservoir to remove the bubbles generated in the electrolysis reaction. This simple fluid flow circuit is the basic electrolyser.

Although not described above, in one embodiment of the system and the methods of the invention, the drying step (i.e. drying of the separated hydrogen) takes place after the hydrogen and oxygen gas have been separated, for example drying of the separated hydrogen stream.

## Claims

1. A hydrogen gas generator system (1) comprising:
- an electrolysis reactor stack (2) adapted to perform electrolysis on an electrolyte solution and generate a mixture of electrolyte solution and oxygen and hydrogen gas;
- a separator (4) configured to receive from the reactor stack (2) the mixture of electrolyte solution and oxygen and hydrogen gas, and separate the oxygen and hydrogen gas mixture from the electrolyte solution;
- a drying system (10) configured to receive the mixture of oxygen and hydrogen gas and remove water and impurities contained within the water from the mixture of gasses;
- a gas separation system (15) configured to expose the at least partially dried gas mixture to cryogenic temperatures to distil the oxygen out of the mixture as non-gaseous oxygen to leave purified hydrogen gas; and
- a storage system (17) for storing the purified hydrogen as a gas or a liquid.

2. A hydrogen gas generator system as claimed in Claim 1 and comprising a plurality of electrolysis reactor stacks (2), in which the separator (4) is configured to receive from the plurality of reactor stacks the mixture of electrolyte solution and oxygen and hydrogen gas.

3. A hydrogen gas generator system as claimed in Claim 1 and comprising a plurality of electrolysis reactor stacks (2) and a plurality of separators (4), in which each separator is configured to receive a mixture of electrolyte solution and oxygen and hydrogen gas from a reactor stack.

4. A hydrogen gas generator system as claimed in Claim 1 in which in the drying step the mixture of gasses is exposed to cryogenic temperatures to distil at least some of the water from the mixture of gasses.

5. A hydrogen gas generator as claimed in Claim 1 including an electrolyte solution return line (5) for returning electrolyte solution from the separator to the reactor stack.

6. A hydrogen gas generator as claimed in Claim 1 including a pump (6) for pumping electrolyte solution in a circuit between the at least one reactor stack (2) and the separator (4).

7. A hydrogen gas generation system as claimed in Claim 6 and including a thermal control system, situated in the pumped circuit, such that optimum system temperatures may be maintained.

8. A hydrogen gas generation system as claimed in Claim 1 further including an electrolyte solution reservoir adapted to supply the or each electrolysis reactor stack with electrolyte solution.

9. A hydrogen gas generation system as claimed in Claim 1 including an oxygen storage system (19) for storing the separated oxygen as a liquid or a gas.

10. A hydrogen gas generation system as claimed in Claim 1 comprising at least 10 electrolysis reactor stacks (2).

11. A hydrogen gas generation system as claimed in Claim 1 comprising at least 50 electrolysis reactor stacks (2).

12. A hydrogen gas generator system according to Claim 1 and comprising:
- a plurality of modular electrolysis reactor stacks (2), each reactor stack adapted to perform electrolysis on an electrolyte solution and generate a mixture of electrolyte solution and oxygen and hydrogen gas;
- one or more separators (4) configured to receive from the reactor stacks (2) the mixture of electrolyte solution and oxygen and hydrogen gas, and separate the oxygen and hydrogen gas mixture from the electrolyte solution;
- one or more drying systems (10) configured to receive the mixture of oxygen and hydrogen gas
- a gas separation system (15) configured to expose the dried gas mixture to cryogenic temperatures to distil the oxygen out of the mixture as non-gaseous oxygen to leave purified hydrogen gas; and
- a storage system (17) for storing the purified hydrogen as a gas or a liquid.

13. A process for generating hydrogen comprising the steps of:
- performing electrolysis on an electrolyte solution in an electrolysis reactor stack to generate a mixture of electrolyte solution, gaseous oxygen and gaseous hydrogen;
- separating the gaseous mixture of oxygen and hydrogen from the electrolyte solution;
- exposing the gaseous mixture of oxygen and hydrogen to a drying system to remove gaseous and non-gaseous water and impurities in the water;
- exposing the gaseous mixture of oxygen and hydrogen to cryogenic temperatures to distil the oxygen out of the mixture as non-gaseous oxygen to leave purified hydrogen gas; and storing the purified hydrogen as a gas or a liquid.

14. A method according to Claim 13, for converting excess electrical energy into hydrogen for storage, wherein excess electrical energy is employed to power the electrolytic conversion of the electrolyte solution into the gaseous mixture of oxygen and hydrogen.

15. A method according to Claim 14, in which the excess energy is supplied by a wind, solar, wave or tidal electricity generating system, optionally
in which the excess electrical energy is employed to power all or substantially all of the steps of the method for converting excess electrical energy into hydrogen for storage.

## Patentansprüche

1. Wasserstoffgaserzeugersystem (1), das Folgendes umfasst:
- einen Elektrolysereaktorstapel (2), der dazu angepasst ist, Elektrolyse an einer Elektrolytlösung auszuführen und ein Gemisch aus Elektrolytlösung und Sauerstoff- und Wasserstoffgas zu erzeugen;
- einen Abscheider (4), der dazu konfiguriert ist, das Gemisch aus Elektrolytlösung und Sauerstoff- und Wasserstoffgas von dem Reaktorstapel (2) zu empfangen und das Sauerstoff- und Wasserstoffgasgemisch aus der Elektrolytlösung abzuscheiden;
- ein Trocknungssystem (10), das dazu konfiguriert ist, das Gemisch aus Sauerstoff- und Wasserstoffgas zu empfangen und Wasser und in dem Wasser enthaltene Verunreinigungen aus dem Gemisch aus Gasen zu entfernen;
- ein Gasabscheidungssystem (15), das dazu konfiguriert ist, das mindestens teilweise getrocknete Gasgemisch Tieftemperaturen auszusetzen, um den Sauerstoff als nicht gasförmigen Sauerstoff aus dem Gemisch herauszudestillieren, um gereinigtes Wasserstoffgas zurückzulassen; und
- ein Speichersystem (17) zum Speichern des gereinigten Wasserstoffs als Gas oder Flüssigkeit.

2. Wasserstoffgaserzeugersystem nach Anspruch 1, umfassend eine Vielzahl von Elektrolysereaktorstapeln (2), wobei der Abscheider (4), dazu konfiguriert ist, das Gemisch aus Elektrolytlösung und Sauerstoff- und Wasserstoffgas von der Vielzahl von Reaktorstapeln zu empfangen.

3. Wasserstoffgaserzeugersystem nach Anspruch 1, umfassend eine Vielzahl von Elektrolysereaktorstapeln (2) und eine Vielzahl von Abscheidern (4), wobei jeder Abscheider dazu konfiguriert ist, ein Gemisch aus Elektrolytlösung und Sauerstoff- und Wasserstoffgas von einem Reaktorstapel zu empfangen.

4. Wasserstoffgaserzeugersystem nach Anspruch 1, wobei in dem Trocknungsschritt das Gemisch aus Gasen Tieftemperaturen ausgesetzt wird, um mindestens einen Teil des Wassers aus dem Gemisch aus Gasen herauszudestillieren.

5. Wasserstoffgaserzeuger nach Anspruch 1, umfassend eine Elektrolyt lösungs-Rücklaufleitung (5) zum Zurückleiten von Elektrolytlösung von dem Abscheider zu dem Reaktorstapel.

6. Wasserstoffgaserzeuger nach Anspruch 1, umfassend eine Pumpe (6) zum Pumpen von Elektrolytlösung in einem Kreislauf zwischen dem mindestens einen Reaktorstapel (2) und dem Abscheider (4).

7. Wasserstoffgaserzeugungssystem nach Anspruch 6, umfassend ein Thermoregelungssystem, das in dem gepumpten Kreislauf situiert ist, sodass optimale Systemtemperaturen aufrechterhalten werden können.

8. Wasserstoffgaserzeugungssystem nach Anspruch 1, weiter umfassend einen Elektrolytlösungsbehälter, der dazu angepasst ist, den oder jeden Elektrolysereaktorstapel mit Elektrolytlösung zu versorgen.

9. Wasserstoffgaserzeugungssystem nach Anspruch 1, umfassend ein Sauerstoffspeichersystem (19) zum Speichern des abgeschiedenen Sauerstoffs als Flüssigkeit oder Gas.

10. Wasserstoffgaserzeugungssystem nach Anspruch 1, umfassend mindestens 10 Elektrolysereaktorstapel (2).

11. Wasserstoffgaserzeugungssystem nach Anspruch 1, umfassend mindestens 50 Elektrolysereaktorstapel (2).

12. Wasserstoffgaserzeugersystem nach Anspruch 1, umfassend:
- eine Vielzahl von modularen Elektrolysereaktorstapeln (2), wobei jeder Reaktorstapel dazu angepasst ist, Elektrolyse an einer Elektrolytlösung auszuführen und ein Gemisch aus Elektrolytlösung und Sauerstoff- und Wasserstoffgas zu erzeugen;
- einen oder mehrere Abscheider (4), die dazu konfiguriert sind, das Gemisch aus Elektrolytlösung und Sauerstoff- und Wasserstoffgas von den Reaktorstapeln (2) zu empfangen und das Sauerstoff- und Wasserstoffgasgemisch aus der Elektrolytlösung abzuscheiden;
- ein oder mehrere Trocknungssysteme (10), die dazu konfiguriert sind, das Gemisch aus Sauerstoff- und Wasserstoffgas zu empfangen;
- ein Gasabscheidungssystem (15), das dazu konfiguriert ist, das getrocknete Gasgemisch Tieftemperaturen auszusetzen, um den Sauerstoff als nicht gasförmigen Sauerstoff aus dem Gemisch herauszudestillieren, um gereinigtes Wasserstoffgas zurückzulassen; und
- ein Speichersystem (17) zum Speichern des gereinigten Wasserstoffs als Gas oder Flüssigkeit.

13. Verfahren zum Erzeugen von Wasserstoff, das folgende Schritte umfasst:
- Ausführen von Elektrolyse an einer Elektrolytlösung in einem Elektrolysereaktorstapel, um ein Gemisch aus Elektrolytlösung, gasförmigem Sauerstoff und gasförmigem Wasserstoff zu erzeugen;
- Abscheiden des gasförmigen Gemischs aus Sauerstoff und Wasserstoff aus der Elektrolytlösung;
- Einwirken auf das gasförmige Gemischs aus Sauerstoff und Wasserstoff mit einem Trocknungssystem, um gasförmiges und nicht gasförmiges Wasser und Verunreinigungen in dem Wasser zu entfernen;
- Einwirken auf das gasförmige Gemisch aus Sauerstoff und Wasserstoff mit Tieftemperaturen, um den Sauerstoff als nicht gasförmigen Sauerstoff aus dem Gemisch herauszudestillieren, um gereinigtes Wasserstoffgas zurückzulassen; und Speichern des gereinigten Wasserstoffs als Gas oder Flüssigkeit.

14. Verfahren nach Anspruch 13 zum Umwandeln von überschüssiger elektrischer Energie in Wasserstoff zur Speicherung, wobei überschüssige elektrische Energie genutzt wird, um die elektrolytische Umwandlung der Elektrolytlösung in das gasförmige Gemisch aus Sauerstoff und Wasserstoff anzutreiben.

15. Verfahren nach Anspruch 14, wobei die überschüssige Energie von einem Wind-, Solar-, Wellen- oder Gezeitenstromerzeugungssystem geliefert wird,
wobei optional die überschüssige elektrische Energie genutzt wird, um alle oder im Wesentlichen alle der Schritte des Verfahrens zum Umwandeln von überschüssiger elektrischer Energie in Wasserstoff zur Speicherung anzutreiben.

## Revendications

1. Système de générateur de gaz d'hydrogène (1) comprenant :
- un empilement de réacteur d'électrolyse (2) adapté pour effectuer une électrolyse sur une solution d'électrolyte et générer un mélange de solution d'électrolyte et de gaz d'oxygène et d'hydrogène ;
- un séparateur (4) configuré pour recevoir de l'empilement de réacteur (2) le mélange de solution d'électrolyte et de gaz d'oxygène et d'hydrogène, et séparer le mélange de gaz d'oxygène et d'hydrogène de la solution d'électrolyte ;
un système de séchage (10) configuré pour recevoir le mélange de gaz d'oxygène et d'hydrogène et éliminer l'eau et les impuretés contenues dans l'eau du mélange de gaz ;
un système de séparation de gaz (15) configuré pour exposer le mélange de gaz au moins partiellement séché à des températures cryogéniques pour distiller l'oxygène hors du mélange sous forme d'oxygène non gazeux et laisser du gaz d'hydrogène purifié ; et
- un système de stockage (17) pour stocker l'hydrogène purifié sous forme de gaz ou de liquide.

2. Système de générateur de gaz d'hydrogène selon la revendication 1 et comprenant une pluralité d'empilements de réacteurs d'électrolyse (2), dans lequel le séparateur (4) est configuré pour recevoir de la pluralité d'empilements de réacteurs le mélange de solution d'électrolyte et de gaz d'oxygène et d'hydrogène.

3. Système de générateur de gaz d'hydrogène selon la revendication 1 et comprenant une pluralité d'empilements de réacteurs d'électrolyse (2) et une pluralité de séparateurs (4), dans lequel chaque séparateur est configuré pour recevoir un mélange de solution d'électrolyte et de gaz d'oxygène et d'hydrogène depuis un empilement de réacteur.

4. Système de générateur de gaz d'hydrogène selon la revendication 1 dans lequel à l'étape de séchage le mélange de gaz est exposé à des températures cryogéniques pour distiller au moins une partie de l'eau du mélange de gaz.

5. Générateur de gaz d'hydrogène selon la revendication 1 comportant une conduite de renvoi de solution d'électrolyte (5) pour renvoyer la solution d'électrolyte du séparateur à l'empilement de réacteur.

6. Générateur de gaz d'hydrogène selon la revendication 1 comportant une pompe (6) pour pomper de la solution d'électrolyte dans un circuit entre l'au moins un empilement de réacteur (2) et le séparateur (4).

7. Système de générateur de gaz d'hydrogène selon la revendication 6 et comportant un système de commande thermique, situé dans le circuit pompé, de façon à maintenir des températures de système optimales.

8. Système de générateur de gaz d'hydrogène selon la revendication 1 comportant en outre un réservoir de solution d'électrolyte adapté pour alimenter le ou chaque empilement de réacteur d'électrolyse en solution d'électrolyte.

9. Système de générateur de gaz d'hydrogène selon la revendication 1 comportant un système de stockage d'oxygène (19) pour stocker l'oxygène séparé sous forme de liquide ou de gaz.

10. Système de générateur de gaz d'hydrogène selon la revendication 1 comprenant au moins 10 empilements de réacteurs d'électrolyse (2).

11. Système de générateur de gaz d'hydrogène selon la revendication 1 comprenant au moins 50 empilements de réacteurs d'électrolyse (2).

12. Système de générateur de gaz d'hydrogène selon la revendication 1 et comprenant :
- une pluralité d'empilements de réacteurs d'électrolyse (2) modulaires, chaque empilement de réacteur étant adapté pour effectuer une électrolyse sur une solution d'électrolyte et générer un mélange de solution d'électrolyte et de gaz d'oxygène et d'hydrogène ;
un ou plusieurs séparateurs (4) configurés pour recevoir depuis les empilements de réacteurs (2) le mélange de solution d'électrolyte et de gaz d'oxygène et d'hydrogène, et séparer le mélange de gaz d'oxygène et d'hydrogène de la solution d'électrolyte ;
- un ou plusieurs systèmes de séchage (10) configurés pour recevoir le mélange de gaz d'oxygène et d'hydrogène ;
- un système de séparation de gaz (15) configuré pour exposer le mélange de gaz séché à des températures cryogéniques pour distiller l'oxygène hors du mélange sous forme d'oxygène non gazeux et laisser du gaz d'hydrogène purifié ; et
- un système de stockage (17) pour stocker l'hydrogène purifié sous forme de gaz ou de liquide.

13. Procédé de génération d'hydrogène comprenant les étapes suivantes :
exécution d'une électrolyse sur une solution d'électrolyte dans un empilement de réacteur d'électrolyse pour générer un mélange de solution d'électrolyte, d'oxygène gazeux et d'hydrogène gazeux ;
- séparer le mélange gazeux d'oxygène et d'hydrogène de la solution d'électrolyte ;
- exposer le mélange gazeux d'oxygène et d'hydrogène à un système de séchage pour éliminer l'eau et les impuretés gazeuses et non gazeuses dans l'eau ;
- exposer le mélange gazeux d'oxygène et d'hydrogène à des températures cryogéniques pour distiller l'oxygène hors du mélange sous forme d'oxygène non gazeux et laisser un gaz d'hydrogène purifié ; et
stocker l'hydrogène purifié sous forme de gaz ou de liquide.

14. Procédé selon la revendication 13, destiné à convertir un excédent d'énergie électrique en hydrogène à stocker, dans lequel l'excédent d'énergie électrique est employé pour alimenter la conversion électrolytique de la solution d'électrolyte en le mélange gazeux d'oxygène et d'hydrogène.

15. Procédé selon la revendication 14, dans lequel l'excédent d'énergie est fourni par un système de génération d'électricité par le vent, le soleil, les vagues ou la marée, facultativement
dans lequel l'excédent d'énergie électrique est employé pour alimenter toutes, ou sensiblement toutes, les étapes du procédé pour convertir un excédent d'énergie électrique en hydrogène à stocker.
